# EUROPEAN PATENT APPLICATION

(11) **EP 4 484 963 A1**
(43) Date of publication of application: **01.01.2025**
(21) Application number: 22928917.8
(22) Date of filing: 07.12.2022
(51) Int. Cl.: G01N 35/02

(54) **EVAPORATION PREVENTION MECHANISM, SPECIMEN STORAGE MECHANISM, AND SPECIMEN STORAGE/TRANSPORT DEVICE**

(30) Priority: 22.02.2022 JP 2022025552
(71) Applicant: HITACHI HIGH-TECH CORPORATION, Tokyo 105-6409 (JP)
(72) Inventor: KUMAGAI, Takahiro, Tokyo 105-6409 (JP); MURAMATSU, Yoshiki, Tokyo 105-6409 (JP); OKUSA, Takenori, Tokyo 105-6409 (JP)
(74) Representative: Strehl Schübel-Hopf & Partner
(86) International application number: PCT/JP2022/045136
(87) International publication number: WO 2023/162400

(57) **Abstract**

Provided is an evaporation prevention mechanism that prevents evaporation during specimen storage without causing carry-over. An evaporation prevention mechanism 12 that accommodates a cylindrical specimen tube 3 accommodating a specimen includes: a cylindrical storage holder 101 that connects an upper opening and a lower opening; a lid 104 that covers the upper opening; a seal member 102 attached to the lower opening; and a bottom receiving member 103b. The specimen tube is inserted into the storage holder from the upper opening, the seal member is in close contact with a side surface of the specimen tube, a bottom portion of the specimen tube is in contact with the bottom receiving member, and the specimen tube is accommodated in a state in which an upper end of the specimen tube is not in contact with the lid.

## Description

### Technical Field

The present invention relates to an evaporation prevention mechanism, a specimen storage mechanism, and a specimen storage and transport device.

### Background Art

In order to guarantee analysis accuracy of an automatic analyzer, a quality control (QC) specimen measurement is necessary, in which a concentration is adjusted about several times a day or every time a sample measurement is performed a predetermined number of times. Since it is necessary to perform the QC specimen measurement for each analysis item, the QC specimen measurement is a steady operation with a high load in laboratory work. For this reason, a specimen storage and transport device that stores the QC specimens in the automatic analyzer and transports the QC specimens to an analysis unit as necessary may be provided.

PTL 1 discloses a cooling storage assembly that cools and stores controls and calibrators. PTL 2 discloses a specimen analyzer that effectively prevents evaporation of a reagent in a state where an opened reagent holder is placed in the specimen analyzer.

### Citation List

### Patent Literature

PTL 1: JP2019-525116A
PTL 2: JP2020-51956A

### Summary of Invention

### Technical Problem

A specimen storage mechanism for storing the QC specimens is required to prevent evaporation during a storage period of the QC specimens and keep the concentration constant. However, although a method of directly covering a specimen tube with a lid has a high evaporation prevention effect, there is a concern that carry-over occurs when the lid is reused for another QC specimen. On the other hand, when a disposable lid is used, an increase in consumables and a mechanism or a space for discarding are required.

In the cooling storage assembly disclosed in PTL 1, evaporation of a specimen is prevented by an evaporation cover. However, a drain for discharging dew condensation water from a tube slot is provided in a bottom surface of the tube slot. No unit for preventing a progress of the evaporation of the QC specimen by air exchange through the drain is provided.

A lid portion disclosed in PTL 2 uses a shape of the reagent holder to cover an opening of the reagent holder in a non-contact manner. Specifically, a shape of a shoulder of the reagent holder is used to place the lid portion on the reagent holder. On the other hand, a specimen tube accommodating the QC specimen generally has a cylindrical shape such as a test tube, and it is difficult to place a lid covering the opening on an upper end of the specimen tube in the non-contact manner.

An object of the invention is to provide an evaporation prevention mechanism that prevents evaporation during specimen storage without causing carry-over, a specimen storage mechanism, and a specimen storage and transport device.

### Solution to Problem

An evaporation prevention mechanism according to one embodiment of the invention that accommodates a cylindrical specimen tube accommodating a specimen includes: a cylindrical storage holder that connects an upper opening and a lower opening; a lid that covers the upper opening; a seal member attached to the lower opening; and a bottom receiving member. The specimen tube is inserted into the storage holder from the upper opening, the seal member is in close contact with a side surface of the specimen tube, a bottom portion of the specimen tube is in contact with the bottom receiving member, and the specimen tube is accommodated in a state in which an upper end of the specimen tube is not in contact with the lid.

### Advantageous Effects of Invention

Provided is an evaporation prevention mechanism that prevents evaporation during specimen storage without causing carry-over, a specimen storage mechanism, and a specimen storage and transport device. Other problems and novel features will become apparent from description of the present specification and the accompanying drawings.

### Brief Description of Drawings

[FIG. 1] FIG. 1 is an overall configuration diagram of an automatic analyzer including a specimen storage and transport device and an analysis unit.
[FIG. 2] FIG. 2 is a plan view (schematic view) of an inside of a refrigerator.
[FIG. 3A] FIG. 3A is a top view of an evaporation prevention mechanism 12 (first embodiment).
[FIG. 3B] FIG. 3B is a cross-sectional view of the evaporation prevention mechanism 12 (first embodiment).
[FIG. 4A] FIG. 4A is a top view of the evaporation prevention mechanism 12 (first embodiment).
[FIG. 4B] FIG. 4B is a cross-sectional view of the evaporation prevention mechanism 12 (first embodiment).
[FIG. 5] FIG. 5 is a top view, a cross-sectional view, and a bottom view of a seal member.
[FIG. 6A] FIG. 6A is a top view of the evaporation prevention mechanism 12 (second embodiment).
[FIG. 6B] FIG. 6B is a cross-sectional view of the evaporation prevention mechanism 12 (second embodiment).
[FIG. 7A] FIG. 7A is a top view of the evaporation prevention mechanism 12 (second embodiment).
[FIG. 7B] FIG. 7B is a cross-sectional view of the evaporation prevention mechanism 12 (second embodiment).
[FIG. 8] FIG. 8 shows an example in which the evaporation prevention mechanisms 12 (second embodiment) are provided in a specimen storage disk 11.
[FIG. 9] FIG. 9 is a view of a specimen storage disk in which storage holders and the specimen storage disk are integrally formed.
[FIG. 10A] FIG. 10A is a top view of the evaporation prevention mechanism 12 (first modification).
[FIG. 10B] FIG. 10B is a cross-sectional view of the evaporation prevention mechanism 12 (first modification).
[FIG. 11A] FIG. 11A is a top view of the evaporation prevention mechanism 12 (second modification).
[FIG. 11B] FIG. 11B is a cross-sectional view of the evaporation prevention mechanism 12 (second modification).
[FIG. 12A] FIG. 12A is a top view of the evaporation prevention mechanism 12 (second modification).
[FIG. 12B] FIG. 12B is a cross-sectional view of the evaporation prevention mechanism 12 (second modification).

### Description of Embodiments

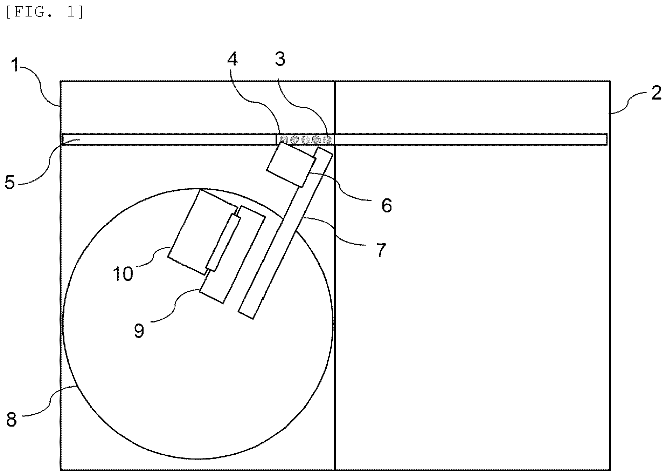

FIG. 1 shows a specimen storage and transport device that implements storage and transport of QC specimens. A specimen storage and transport device 1 is connected to one or more analysis units 2 to constitute an automatic analyzer. The specimen storage and transport device 1 includes a rack transport mechanism 5, a specimen tube transport mechanism 6, and a refrigerator (specimen storage mechanism) 8 as main components. The QC specimen is accommodated in a cylindrical specimen tube 3, and a plurality of specimen tubes 3 are loaded on a sample rack 4. The rack transport mechanism 5 that transports the sample rack 4 is connected to the analysis unit 2, a specimen loading unit (not shown), and the like, and by moving the sample rack 4 between the analysis unit 2 and the specimen loading unit, transport and removal of the QC specimens into and from the automatic analyzer, transport of the QC specimens from the specimen storage and transport device 1 to the analysis unit 2 for a QC specimen measurement, and transport of the QC specimens from the analysis unit 2 to the specimen storage and transport device 1 for storing the QC specimens again after aliquoting the QC specimens are implemented.

In the example in FIG. 1, a configuration example in which the sample rack 4 is provided on a belt and transported is shown, but a configuration causing the sample rack 4 to move by a gripping operation and a lifting operation may be adopted. In addition, the sample rack 4 may not be used, and a transport disk causing the specimen tube 3 to move by rotation may be used for transporting the QC specimens between devices.

The specimen tube 3 loaded into the specimen storage and transport device 1 via the rack transport mechanism 5 is taken out of the sample rack 4 by the specimen tube transport mechanism 6. The taken-out specimen tube 3 is held by the specimen tube transport mechanism 6, and the specimen tube transport mechanism 6 holding the specimen tube 3 moves on a specimen tube transport mechanism base 7, thereby transporting the specimen tube 3 to the refrigerator 8. A shutter 9 that can be opened and closed is provided in a part of a cover of the refrigerator 8, and the shutter 9 is opened when the specimen tube transport mechanism 6 accesses an inside of the refrigerator. In the example in FIG. 1, the shutter 9 is a part of an upper surface cover, but is not limited thereto. The shutter 9 may have a structure in which a side surface of the refrigerator 8 is opened, or may be a hole having a size allowing the specimen tube transport mechanism 6 to transport a tube into the refrigerator.

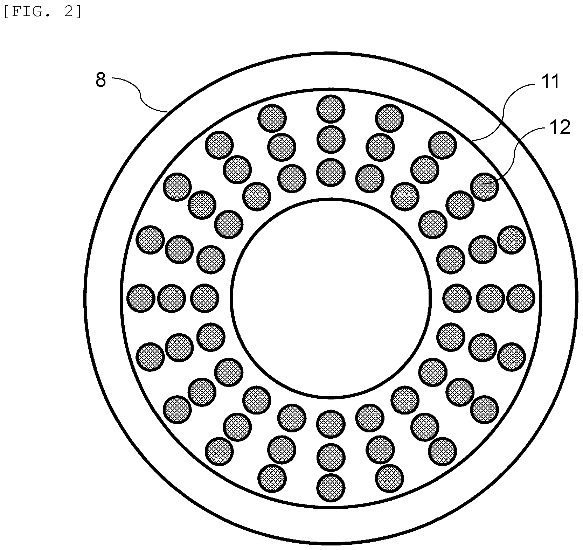

After the shutter 9 is opened, the specimen tube transport mechanism 6 stores the specimen tube 3 in an evaporation prevention mechanism disposed inside the refrigerator. FIG. 2 schematically shows a plan view of the inside of the refrigerator 8. A specimen storage disk 11 is provided inside the refrigerator 8, and evaporation prevention mechanisms 12 are disposed on the specimen storage disk 11. The specimen storage disk 11 is rotatable in a circumferential direction, and moves the evaporation prevention mechanism 12 accessed by the specimen tube transport mechanism 6 to a position immediately below the shutter 9. In this example, three evaporation prevention mechanisms 12 are disposed in a radial direction of the specimen storage disk 11 in a radial manner, but an arrangement method of the evaporation prevention mechanisms 12 on the specimen storage disk 11 is not particularly limited. An internal structure of the refrigerator 8 shown in FIG. 2 is an example, and the invention is not limited to the above structure. For example, the evaporation prevention mechanisms 12 may be fixedly disposed in the refrigerator 8, and the specimen tube transport mechanism 6 may access each of the evaporation prevention mechanisms 12 in the refrigerator 8.

Although a detailed configuration of the evaporation prevention mechanism 12 will be described later, the specimen tube 3 can be individually stored in the evaporation prevention mechanism. When the specimen tube transport mechanism 6 accesses the evaporation prevention mechanism, a lid of the evaporation prevention mechanism is opened by a lid opening and closing mechanism 10 in advance, and the lid of the evaporation prevention mechanism 12 is closed by the lid opening and closing mechanism 10 after a storage operation or a taken-out operation of the specimen tube with respect to the evaporation prevention mechanism performed by the specimen tube transport mechanism 6 is completed.

After an operation of transporting the specimen tube 3 into the refrigerator 8 or an operation of removing the specimen tube 3 from the refrigerator 8 is completed, the refrigerator 8 is closed by closing the shutter 9. However, when the operation of transporting the specimen tube 3 into the refrigerator 8 or the operation of removing the specimen tube 3 from the refrigerator 8 is continuously performed a plurality of times, the shutter 9 may be kept in an open state until a series of operations are completed.

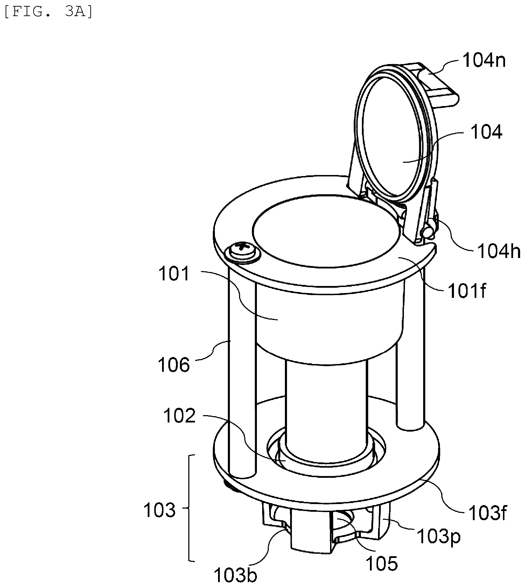

A first embodiment of the evaporation prevention mechanism 12 will be described with reference to FIGS. 3A and 3B, 4A and 4B, and 5.

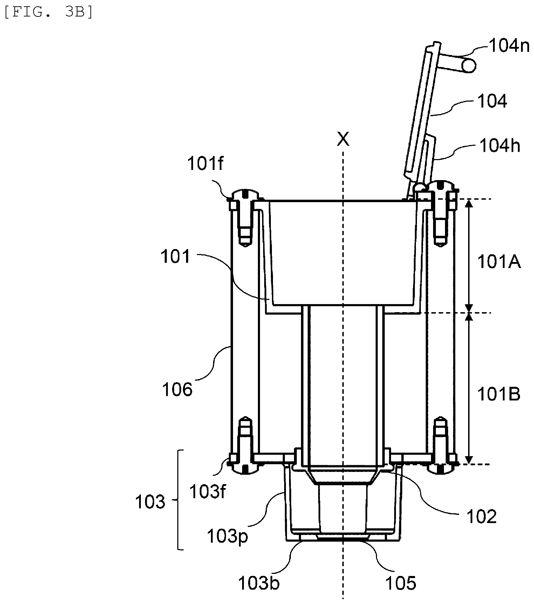

FIGS. 3A and 3B show the evaporation prevention mechanism 12 (first embodiment) in a state where a lid 104 is opened, in which FIG. 3A is a top view and FIG. 3B is a cross-sectional view. The evaporation prevention mechanism 12 (first embodiment) includes a storage holder 101, a seal member 102, a bottom receiving portion 103, and the lid 104. The storage holder 101 has a tubular shape that opens vertically, and includes a large diameter portion 101A connected to an upper opening and a small diameter portion 101B connected to a lower opening. Since a diameter changes discontinuously at a boundary between the large diameter portion 101A and the small diameter portion 101B, the storage holder 101 has a stepped shape. The lid 104 and the seal member 102 are provided at the upper opening and the lower opening of the storage holder 101, respectively. A diameter of the small diameter portion 101B has a size slightly larger than an outer diameter of the specimen tube 3 stored in the evaporation prevention mechanism 12. The lid 104 is attached to a flange 101f connected to the upper opening of the storage holder 101 via a hinge 104h, and the lid opening and closing mechanism 10 opens and closes the lid 104 by a handle 104n of a lid main body.

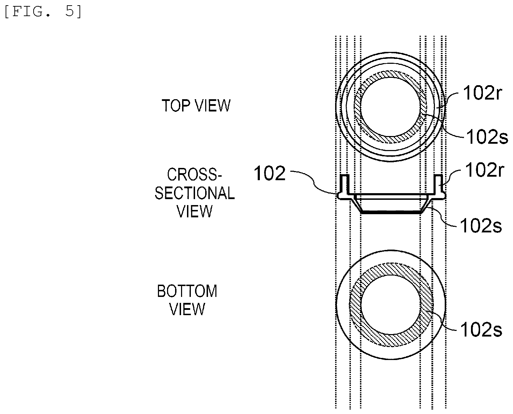

FIG. 5 shows a top view, a cross-sectional view, and a bottom view of the seal member 102. The seal member 102 is made of an elastic body such as rubber. The seal member 102 is provided with a fixing portion 102r having an annular convex shape on an upper side of an annular main body portion, and a seal portion 102s having an annular convex shape having a tapered diameter on a lower side of the main body portion. A diameter of a tip of the seal portion 102s is smaller than the outer diameter of the specimen tube 3 stored in the evaporation prevention mechanism 12. The seal member 102 is attached to an end portion of the small diameter portion 101B of the storage holder 101 by the fixing portion 102r.

The bottom receiving portion 103 includes a flange 103f, a support member 103p, and a bottom receiving member 103b. The bottom receiving member 103b is a member that supports a bottom portion of the specimen tube 3 stored in the evaporation prevention mechanism 12, and is provided with a hole 105 that is a contact position of the bottom portion of the specimen tube 3. Here, when the bottom portion of the specimen tube 3 is inserted into the hole 105, the bottom portion of the specimen tube 3 is positioned and supported. Instead of the hole 105, an annular protrusion may be provided to position and support the specimen tube 3. The bottom receiving member 103b is fixed to the flange 103f by one or more support members 103p, and the flange 103f and the flange 101f of the storage holder 101 are fixed to each other by support poles 106. When a center of the hole 105 supporting the bottom portion of the specimen tube 3 is referred to as a center of the bottom receiving member 103b, the bottom receiving member 103b is fixed such that the center of the bottom receiving member 103b coincides with a center axis X of the small diameter portion 101B of the storage holder 101. Accordingly, the specimen tube 3 stored in the evaporation prevention mechanism 12 is stably stored in a vertical state. Although the example in which the flanges are coupled to each other by the support poles is shown as a method of fixing the storage holder 101 and the bottom receiving portion 103, the method is not limited thereto.

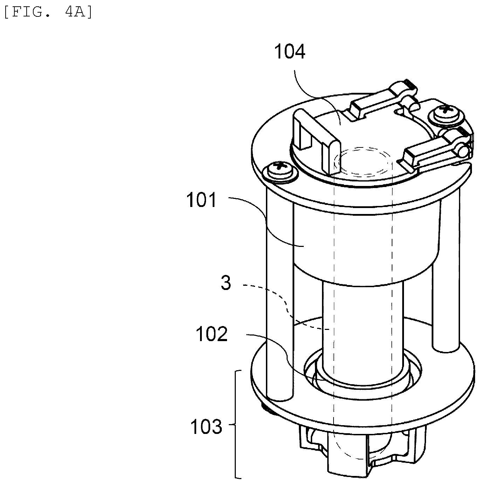

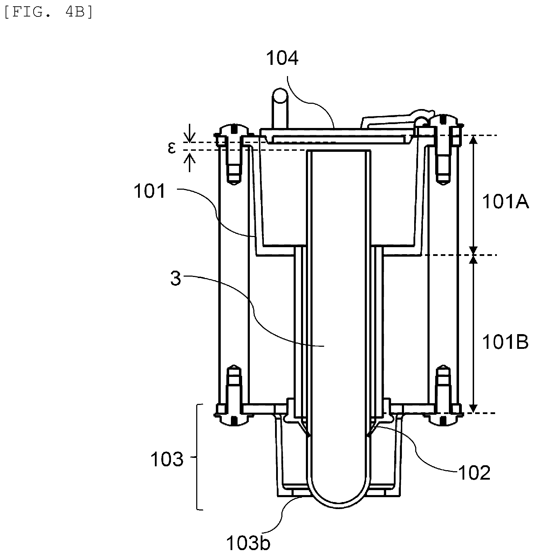

The storage of the specimen tube in the evaporation prevention mechanism 12 is performed by the specimen tube transport mechanism 6 inserting the specimen tube 3 from above in a vertical direction into the evaporation prevention mechanism 12 in which the lid 104 is opened by the lid opening and closing mechanism 10. The specimen tube transport mechanism 6 expands the seal portion 102s of the seal member 102 and inserts the specimen tube 3, and ends an insertion process of the specimen tube 3 when the bottom portion of the specimen tube 3 comes into contact with the bottom receiving member 103b and does not advance any further. Thereafter, the specimen tube transport mechanism 6 separates the specimen tube 3 and moves away from the evaporation prevention mechanism 12. The lid opening and closing mechanism 10 closes the lid 104 of the evaporation prevention mechanism 12. FIGS. 4A and 4B show the evaporation prevention mechanism 12 (first embodiment) in a state where the specimen tube 3 is stored therein and the lid 104 is closed, in which FIG. 4A is a top view and FIG. 4B is a cross-sectional view.

In the state where the specimen tube 3 is stored, the seal member 102 seals a side surface of the specimen tube 3 without a gap by expanding the seal portion 102s. Therefore, when the specimen tube 3 is inserted, friction occurs between the seal portion 102s and the side surface of the specimen tube 3 in contact therewith. Normally, a specimen identification label (not shown) for identifying the accommodated QC specimen is attached to the side surface of the specimen tube 3. In the state where the specimen tube 3 is stored in the evaporation prevention mechanism 12, the specimen identification label is preferably located above the seal member 102. Accordingly, it is possible to prevent rubbing caused by the specimen identification label coming into contact with the seal portion 102s at the time of insertion and taken-out of the specimen tube 3. Further, when the seal member 102 seals the specimen tube 3 at the position where the specimen identification label is attached, there is a possibility that seal performance deteriorates due to a twist of the specimen identification label or the like, and this possibility can be prevented.

The seal member 102 is in close contact with the side surface of the specimen tube 3, so that rotation of the specimen tube 3 in the storage holder 101 can be prevented. Accordingly, when the specimen identification label is a label on which a bar code is displayed, a direction in which the bar code is displayed can be kept constant, and when the specimen tube is taken out of the storage holder 101 and the specimen identification label is read, the specimen identification label can be read without detecting a bar code position or the like. The specimen tube 3 is supported by the seal member 102 and the bottom receiving member 103b, the center of the bottom receiving member 103b coinciding with the center axis X of the small diameter portion 101B of the storage holder 101, so that the specimen tube 3 is stably stored in the evaporation prevention mechanism 12 in the vertical state. Accordingly, handling accuracy of the specimen tube 3 by the specimen tube transport mechanism 6 can be improved.

A diameter and a height of the large diameter portion 101A of the storage holder 101 are determined so as to have sizes not hindering the operations of the specimen tube transport mechanism 6 that handles the specimen tube 3. As described above, the sizes of the large diameter portion 101A of the storage holder 101 need to be determined in advance so as not to hinder the operations of the specimen tube transport mechanism 6 that holds the specimen tube 3 and inserts the specimen tube 3 into the storage holder 101. A space around the specimen tube 3 in a state where the specimen tube 3 is stored in the evaporation prevention mechanism 12 is a system closed from an external environment by the storage holder 101, the seal member 102, and the closed lid 104, and is referred to as a storage region. As a volume of the storage region is smaller, an evaporation amount of the QC specimen from the specimen tube 3 can be further prevented. Therefore, it is desirable that the diameter and the height of the large diameter portion 101A of the storage holder 101 are set to be minimum sizes so as to not hinder the operations of the specimen tube transport mechanism 6, and the diameter of the small diameter portion 101B is also set to an extent of being slightly larger than the outer diameter of the specimen tube 3. For example, the diameter of the large diameter portion 101A of the storage holder 101 shown in the drawing increases from a connection portion (step) with the small diameter portion 101B toward the upper opening, but the invention is not limited thereto, and a shape and a size of the diameter of the large diameter portion 101A can be determined such that a volume of the large diameter portion 101A decreases according to the shape of the specimen tube transport mechanism 6 and the operations during the transport and removal.

Further, as shown in FIG. 4B, there is a gap having a distance ε between a lower surface of the lid 104 and an upper end of the specimen tube 3, and the lid 104 and the specimen tube 3 do not come into contact with each other. Accordingly, it is possible to prevent carry-over for a next specimen to be stored in the evaporation prevention mechanism 12. In the configuration of the evaporation prevention mechanism 12 (first embodiment), an insertion depth of the specimen tube 3 is determined according to a position of the bottom receiving member 103b. Therefore, even when the specimen tube 3 having a largest diameter used in the automatic analyzer is inserted, the bottom receiving member 103b is attached at a position where the specimen tube 3 and the lower surface of the lid 104 are not in contact with each other. As described above, by controlling the insertion depth of the specimen tube 3 by the bottom receiving member 103b, even if the diameter of the specimen tube 3 to be stored is different, the specimen tube 3 can be appropriately stored in the evaporation prevention mechanism 12. For example, in a case where the insertion depth of the specimen tube 3 is controlled according to a driving amount of a motor of the specimen tube transport mechanism 6, when the diameter of the specimen tube 3 is different, a resistance at the time of passing through the seal member 102 is different, and thus the insertion depth tends to be different. In the configuration of the present embodiment, by inserting the specimen tube 3 until the specimen tube 3 abuts against the bottom receiving member 103b, the specimen tube 3 can be reliably stored at an appropriate position of the evaporation prevention mechanism 12, and the handling accuracy of the specimen tube 3 can be improved.

On the other hand, after the specimen tube 3 is taken out, since a lower end of the storage holder 101 is opened, dew condensation water generated in the storage region is discharged from the storage holder 101. Therefore, it is not necessary to provide a drain for discharging the dew condensation water in the storage region. If the drain is provided in the evaporation prevention mechanism 12, air can be exchanged between an inside and an outside of the storage region even when the specimen tube 3 is stored, and the evaporation amount of the QC specimen increases, and thus it is not desirable to provide the drain.

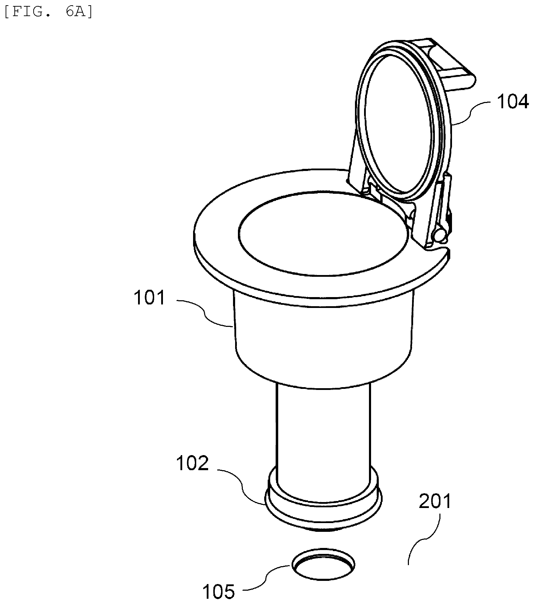

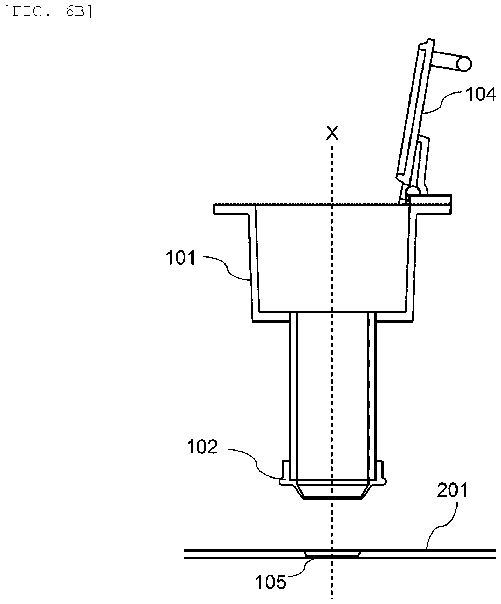

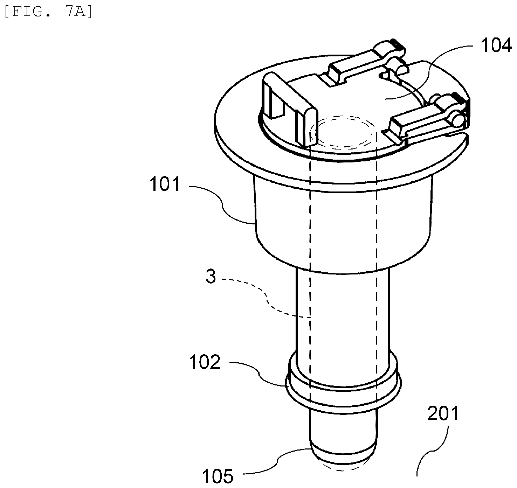

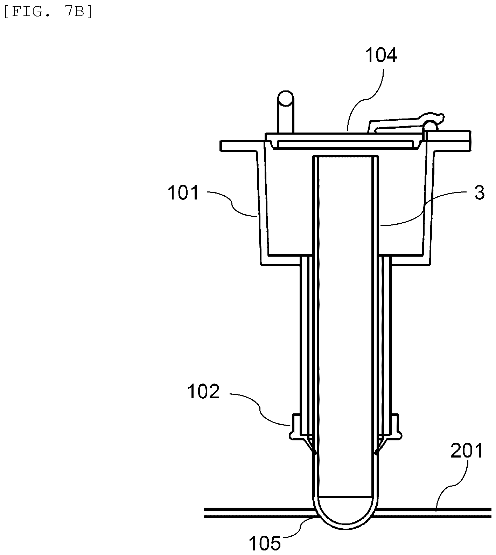

A second embodiment of the evaporation prevention mechanism 12 will be described with reference to FIGS. 6A and 6B, and 7A and 7B. The same components as those in the first embodiment are denoted by the same reference numerals, and redundant description thereof will be omitted. A difference between the first embodiment and the second embodiment is the configuration of the bottom receiving member. While the bottom receiving member is provided for each storage holder in the first embodiment, the bottom receiving member is provided commonly for a plurality of storage holders in the second embodiment.

FIGS. 6A and 6B show the evaporation prevention mechanism 12 (second embodiment) in a state where the lid 104 is opened, in which FIG. 6A is a top view and FIG. 6B is a cross-sectional view. A bottom receiving member 201 is provided as a common member for the plurality of storage holders 101, and the hole 105 serving as the contact position of the bottom portion of the specimen tube 3 is provided corresponding to the storage holder 101. As in the first embodiment, instead of the hole 105, the annular protrusion may be provided to position and support the specimen tube 3.

FIGS. 7A and 7B show the evaporation prevention mechanism 12 (second embodiment) in the state where the specimen tube 3 is stored therein and the lid 104 is closed, in which FIG. 7A is a top view and FIG. 7B is a cross-sectional view.

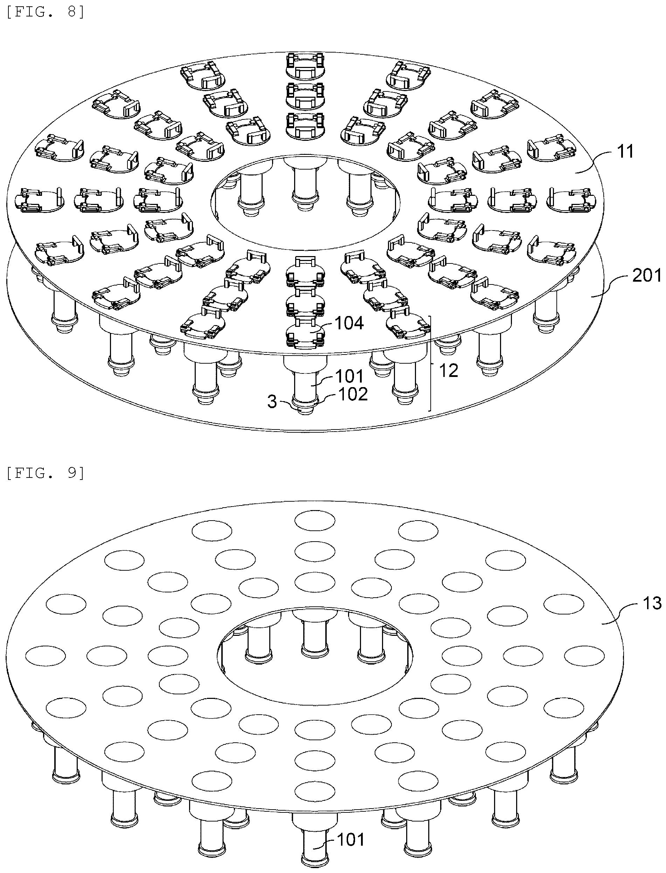

FIG. 8 shows an example in which the evaporation prevention mechanisms 12 (second embodiment) are placed in the specimen storage disk 11. In this embodiment, the bottom receiving member 201 is a bottom receiving member common to all the evaporation prevention mechanisms 12 placed in the specimen storage disk 11. The bottom receiving member 201 has a disk shape having the same size as the specimen storage disk 11, faces the specimen storage disk 11, and is provided with the hole 105 which is the contact position of the bottom portion of the specimen tube 3 corresponding to an arrangement position of the evaporation prevention mechanism 12.

The bottom receiving member 201 is shared by the plurality of evaporation prevention mechanisms 12 in this manner, so that there is an advantage that the structure of each evaporation prevention mechanism 12 can be simplified. In this case, the specimen storage disk 11 and the storage holder 101 of the evaporation prevention mechanism 12 may be integrally formed. FIG. 9 shows the specimen storage disk 13 in which the storage holders 101 and the specimen storage disk are integrally formed. By attaching the lid 104 and the seal member 102 to the upper opening and the lower opening of the storage holder 101 formed in the specimen storage disk 13, respectively, and disposing the bottom receiving member 201, a specimen storage disk in which the same evaporation prevention mechanisms 12 as in FIG. 8 are disposed can be implemented. The specimen storage disk 13 can be manufactured at low cost by being formed of, for example, resin.

Hereinafter, modifications of the evaporation prevention mechanism 12 will be described. In the following modifications, the description of the bottom receiving member may be omitted, which may be provided to the evaporation prevention mechanism 12 as in the first embodiment, or the bottom receiving member common to the plurality of evaporation prevention mechanisms 12 may be provided as in the second embodiment. In addition, the evaporation prevention mechanism may be provided on the specimen storage disk having a disk shape, or the storage holder of the evaporation prevention mechanism may be formed integrally with the specimen storage disk.

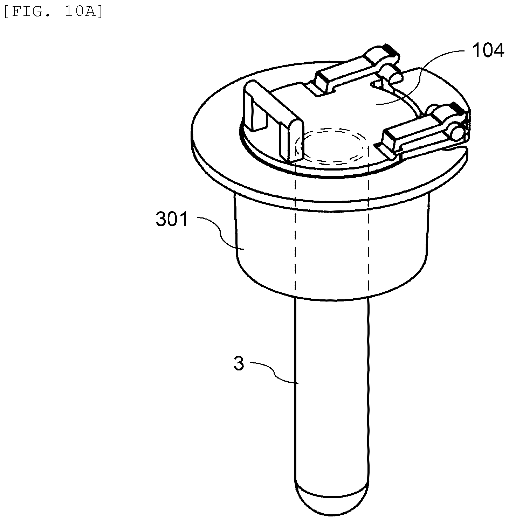

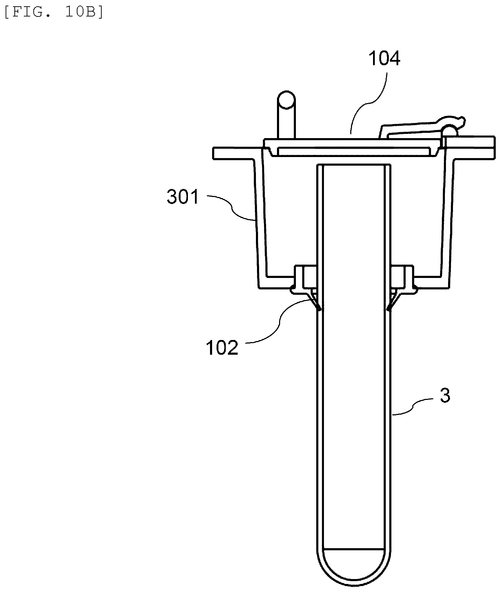

FIGS. 10A and 10B show the evaporation prevention mechanism 12 (first modification) in the state where the specimen tube 3 is stored therein and the lid 104 is closed, in which FIG. 10A is a top view and FIG. 10B is a cross-sectional view.

A storage holder 301 in the present modification has a simple shape with no step, and the small diameter portion of the storage holder 101 in the first embodiment and the second embodiment is removed, so that the storage holder 301 in the present modification can be easily manufactured. It is effective in a case where a defect related to the specimen identification label due to the removal of the small diameter portion is allowable, or in a case where the specimen identification label can be downsized and the specimen identification label can be contained in the storage region.

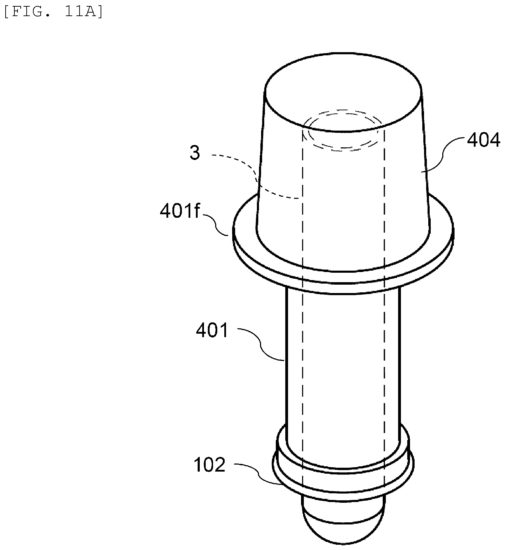

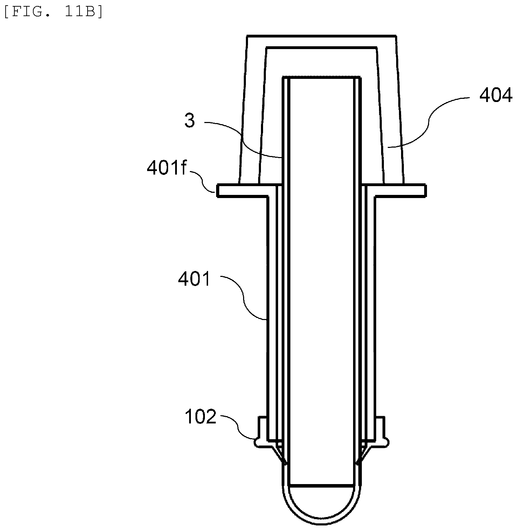

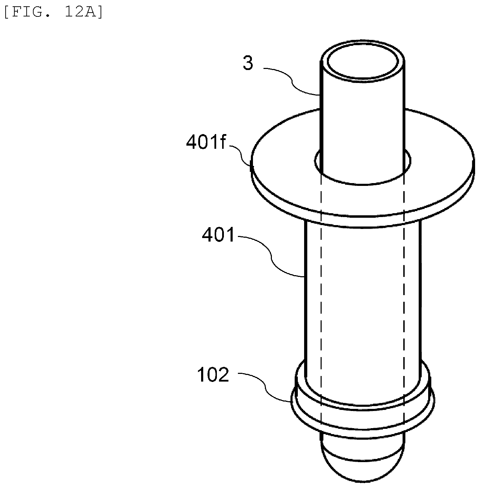

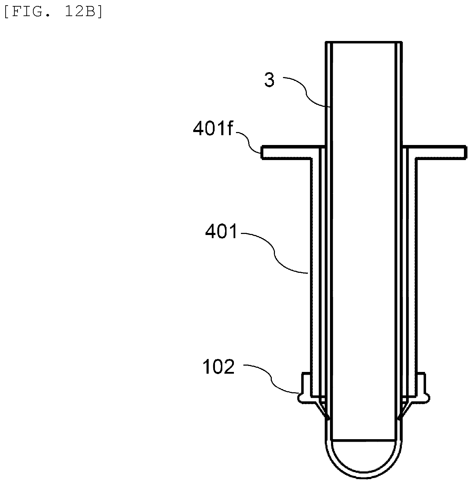

A second modification of the evaporation prevention mechanism 12 will be described with reference to FIGS. 11A and 11B, and 12A and 12B. The evaporation prevention mechanism 12 (second modification) is an example in which a detachable cap 404 is used as the lid. FIGS. 11A and 11B show the evaporation prevention mechanism 12 (second modification) in a state where the specimen tube 3 is stored therein and covered with the cap 404, FIG. 11A is a top view, and FIG. 11B is a cross-sectional view. FIGS. 12A and 12B show the evaporation prevention mechanism 12 (second modification) in a state where the specimen tube 3 is stored therein and the cap 404 is removed, FIG. 12A is a top view, and FIG. 12B is a cross-sectional view. The cap 404 is placed on a flange 401f to cover the upper end of the specimen tube 3, thereby preventing evaporation of the QC specimen. In this modification, the flange 401f of a storage holder 401 is used as a cap mounting position, but the cap mounting position may be set on the specimen storage disk on which the storage holder 401 is provided or which is formed integrally with the storage holder 401 without providing the flange 401f of the storage holder 401. Further, in this modification, the cap mounting position has a plate shape, but a step corresponding to an opening of the cap 404 may be provided and fitted to the cap 404. The cap 404 has a shape in which an inner wall thereof does not come into contact with the upper end of the specimen tube 3 when the cap 404 is placed at the cap mounting position, so that it is possible to prevent the carry-over for the next specimen to be stored in the evaporation prevention mechanism 12.

In the second modification, since it is possible to secure a region for the specimen tube transport mechanism 6 to access the evaporation prevention mechanism 12 by removing the cap 404, it is not necessary to separately provide a region for avoiding interference of the specimen tube transport mechanism 6 in the evaporation prevention mechanism 12. Therefore, a diameter of the storage holder 401 can have a size slightly larger than the outer diameter of the specimen tube 3, the volume of the storage region can be reduced, and the evaporation amount of the QC specimen from the specimen tube 3 can be effectively reduced.

The invention is not limited to the specific embodiments described above, and includes various modifications. For example, the specific embodiments described above have been described in detail to facilitate understanding of the invention, and the invention is not necessarily limited to those including all the described configurations. A part of the configuration of one specific embodiment can be replaced with the configuration of another specific embodiment, and the configuration of another specific embodiment can be added to the configuration of one specific embodiment. A part of a configuration in each specific embodiment may be added to, deleted from, or replaced with another configuration. For example, a liquid accommodated in a cylindrical holder is useful for storage of specimens other than the QC specimens and other specimens.

### Reference Signs List

1: specimen storage and transport device
2: analysis unit
3: specimen tube
4: sample rack
5: rack transport mechanism
6: specimen tube transport mechanism
7: specimen tube transport mechanism base
8: refrigerator (specimen storage mechanism)
9: shutter
10: lid opening and closing mechanism
11, 13: specimen storage disk
12: evaporation prevention mechanism
101: storage holder
101A: large diameter portion
101B: small diameter portion
101f: flange
102: seal member
102r: fixing portion
102s: seal portion
103: bottom receiving portion
103f: flange
103b: bottom receiving member
103p: support member
104: lid
104h: hinge
104n: handle
105: hole
106: support pole
201: bottom receiving member
301: storage holder
401: storage holder
401f: flange
404: cap

## Claims

1. An evaporation prevention mechanism that accommodates a cylindrical specimen tube accommodating a specimen, the evaporation prevention mechanism comprising:
a tubular storage holder that connects an upper opening and a lower opening;
a lid that covers the upper opening;
a seal member attached to the lower opening; and
a bottom receiving member, wherein
the specimen tube is inserted into the storage holder from the upper opening, the seal member is in close contact with a side surface of the specimen tube, a bottom portion of the specimen tube is in contact with the bottom receiving member, and the specimen tube is accommodated in a state in which an upper end of the specimen tube is not in contact with the lid.

2. The evaporation prevention mechanism according to claim 1, wherein
the seal member is an elastic body.

3. The evaporation prevention mechanism according to claim 1, wherein
the lid is attached to an outer periphery of the upper opening in an openable and closable manner, and
a diameter of the upper opening is larger than a diameter of the lower opening, and the storage holder has a step at which a diameter of the storage holder changes discontinuously between a portion connected to the upper opening and a portion connected to the lower opening.

4. The evaporation prevention mechanism according to claim 1, wherein
the lid is detachably placed on an outer periphery of the upper opening.

5. The evaporation prevention mechanism according to claim 1, wherein
the bottom receiving member is shared by a plurality of evaporation prevention mechanisms.

6. A specimen storage mechanism that stores a plurality of cylindrical specimen tubes each accommodating a specimen, the specimen storage mechanism comprising:
a specimen storage disk;
a plurality of cylindrical storage holders disposed on the specimen storage disk and each connecting an upper opening and a lower opening;
a lid that covers the upper opening of the storage holder and a seal member attached to the lower opening of the storage holder, the lid and the seal member being provided for each of the plurality of storage holders; and
a bottom receiving member, wherein
the specimen tube is inserted into one of the storage holders disposed on the specimen storage disk, the seal member is in close contact with a side surface of the specimen tube, a bottom portion of the specimen tube is in contact with the bottom receiving member, and the specimen tube is accommodated in a state in which an upper end of the specimen tube is not in contact with the lid that covers the upper opening of the corresponding storage holder.

7. The specimen storage mechanism according to claim 6, wherein
the specimen storage mechanism is kept cold.

8. The specimen storage mechanism according to claim 6, wherein
the lid is attached to an outer periphery of the upper opening in an openable and closable manner, and
a diameter of the upper opening is larger than a diameter of the lower opening, and the storage holder has a step at which a diameter of the storage holder changes discontinuously between a portion connected to the upper opening and a portion connected to the lower opening.

9. The specimen storage mechanism according to claim 6, wherein
the lid is detachably placed on an outer periphery of the upper opening.

10. The specimen storage mechanism according to claim 6, wherein
the bottom receiving member has a disk shape, and faces the specimen storage disk, so that the bottom portion of the specimen tube inserted into the storage holder disposed on the specimen storage disk is in contact with the bottom receiving member.

11. The specimen storage mechanism according to claim 6, wherein
the specimen storage disk and the plurality of storage holders are integrally formed.

12. A specimen storage and transport mechanism that stores and transports a cylindrical specimen tube accommodating a specimen to be measured by an analysis unit, the specimen storage and transport mechanism comprising:
a specimen storage mechanism that stores the specimen tube; and
a specimen tube transport mechanism that transports or removes the specimen tube into or from the specimen storage mechanism, wherein
the specimen storage mechanism includes a specimen storage disk, a plurality of cylindrical storage holders disposed on the specimen storage disk and each connecting an upper opening and a lower opening, a lid that covers the upper opening of the corresponding storage holder and a seal member attached to the lower opening of the corresponding storage holder, the lid and the seal member being provided for each of the plurality of storage holders, and a bottom receiving member, and
the specimen tube is inserted into one of the storage holders disposed on the specimen storage disk, the seal member is in close contact with a side surface of the specimen tube, a bottom portion of the specimen tube is in contact with the bottom receiving member, and the specimen tube is accommodated in the specimen storage mechanism in a state in which an upper end of the specimen tube is not in contact with the lid that covers the upper opening of the corresponding storage holder.

13. The specimen storage and transport mechanism according to claim 12, wherein
the specimen storage mechanism is kept cold.

14. The specimen storage and transport mechanism according to claim 12, wherein
the lid is attached to an outer periphery of the upper opening in an openable and closable manner, and
a diameter of the upper opening is larger than a diameter of the lower opening, and the storage holder has a step at which a diameter of the storage holder changes discontinuously between a portion connected to the upper opening and a portion connected to the lower opening.

15. The specimen storage and transport mechanism according to claim 14, wherein
when the specimen tube is transported into or removed from the specimen storage mechanism, the specimen tube transport mechanism is inserted into a region above the step of the storage holder in order to hold the specimen tube.
